# EUROPEAN PATENT SPECIFICATION

(11) **EP 3 332 067 B1**
(45) Date of publication and mention of the grant of the patent: **30.06.2021**
(21) Application number: 17764919.1
(22) Date of filing: 20.07.2017
(51) Int. Cl.: E01C 13/08, C08J 9/18, C08L 67/04

(54) **ARTIFICIAL TURF SUITABLE FOR SPORTS FIELDS**
FÜR SPORTFELDER GEEIGNETER KUNSTRASEN
GAZON ARTIFICIEL ADAPTÉ AUX TERRAINS DE SPORT

(30) Priority: 22.07.2016 NL 2017214
(43) Date of publication of application: 13.06.2018
(73) Proprietor: BEWiSynbra RAW B.V., 4871 NM Etten-Leur (NL); Saltex Oy, 62900 Alajärvi (FI)
(72) Inventor: NOORDEGRAAF, Jan, 4871 NM Etten-Leur (NL); SALMENAUTIO, Hannu Tapani, 62900 Alajarvi (FI); VAN DER WENDE, Anjo Antonius Johannes, 5384 VP Heesch (NL)
(74) Representative: Algemeen Octrooi- en Merkenbureau B.V.
(86) International application number: PCT/NL2017/050490
(87) International publication number: WO 2018/016956

(56) References cited:
- WO-A1-2008/093284
- WO-A1-2008/093284
- WO-A1-2013/062416
- WO-A1-2013/062416
- WO-A1-2013/062416
- WO-A1-2013/181705
- WO-A1-2013/181705
- WO-A1-2014/037889
- WO-A1-2014/037889
- WO-A1-2016/190744
- WO-A1-2016/190744
- WO-A1-2016/190744
- WO-A1-2017/183976
- WO-A1-2017/183976
- WO-A2-2008/130225
- WO-A2-2008/130225
- US-A- 4 337 283
- US-A- 4 337 283
- US-A- 4 337 283
- DATABASE WPI Week 200421 Thomson Scientific, London, GB; AN 2004-217832 XP002788313, -& JP 2003 301067 A (KANEBO GOSEN KK) 21 October 2003 (2003-10-21)
- DATABASE WPI Week 200421 Thomson Scientific, London, GB; AN 2004-217832 XP002788313, -& JP 2003 301067 A (KANEBO GOSEN KK) 21 October 2003 (2003-10-21)

## Description

The present invention relates to an artificial turf suitable for sports fields consisting at least of a substrate to which first artificial grass fibres are attached and of a granular infill, which is provided between said first artificial grass fibres.

US 4,337, 283 relates to a playing surface for athletic games comprising: a firm, stable subsurface, a pile fabric having a flexible backing and normally upstanding pile elements resembling grass, a compacted top-dressing layer comprising a mixture of from 25 to 95 volume percent resilient particles and from 5 to 75 volume percent fine sand interspersed among the pile elements. Examples of resilient materials used for the resilient particles are: granulated cork, rubber particles, beads of synthetic polymers, e.g., vinyl chloride, vinyl ethers, vinyl acetate etc., the acrylates and methacrylates, polyvinylidene chloride, urethanes, polyamids and polyesters, synthetic polymer foam particles, e.g., polyvinyl chloride foams, polyvinyl ether foams, foamed polystyrene, foamed polyurethanes and foamed polyesters.

US 2003/161996 relates to a synthetic grass assembly wherein the infill layer comprises: a bottom course of intermixed hard and resilient granules, disposed upon the top surface of the backing; and a top course substantially exclusively of resilient granules disposed upon the bottom course, an upper portion of the synthetic ribbons extending upwardly from a top surface of the top course. The resilient granules are selected from the group consisting of: cryogenically ground rubber; rubber; cork; polymer beads; synthetic polymer foam; styrene; perlite, neoprene, and EPDM rubber, and the hard granules are selected from the group consisting of: sand; hard aggregate; silica sand; gravel; slag; granulated plastic; and polymer beads.

JP2010-275787 relates to an artificial turf including a granular material layer by filling a granular material between inserted turf threads, wherein at least the surface part of the granular material layer is provided with an elastic layer comprising an elastic foam granular material having a specific gravity of 1 or larger and including an independent foaming structure.

WO2016/190744 relates to an artificial turf system comprising: a resilient layer, an artificial grass layer comprising a substrate and pile fibres upstanding from the substrate, an infill layer, disposed on the substrate and interspersed between the pile fibres, the infill layer comprising smooth, hard granules having a mean size of between 2.0 mm and 10 mm, the infill layer comprises at least 50 vol% of the smooth, hard granules. The granules have a surface hardness of greater than Shore D 45 and comprise a thermoplastic material, selected from the group comprising: PE, PP, PA, PU, PS, ABS, PC, PET, PEF, PHA and PLA. The examples disclosed in WO2016/190744 only refer to a first infill formed of elastomeric rubber particles and a sand layer, wherein the sand layer was 15 mm and the infill had Shore A hardness 60 - 65 and a grain size of 0.8 mm - 2.5 mm of undefined shape, and to a second infill layer consisting of 25 mm depth of PE granules, having a hardness of 40 Shore D, well rounded with medium sphericity, 3,8 mm average diameter and a coverage of 12.5 kg/m².

US 6,818,274 relates to an artificial turf system that uses support material for an infill layer, wherein the particulate matter of infill layer may include both hard granules or particles, such as sand, rocks or other hard particles, as well as resilient particles chosen from the group of rubber, such as butyl rubber, nitrile rubber, crumb rubber or ground tire rubber, cryogenic rubber particles, neoprene, and polyethylene foam.

WO2009/118390 relates to a polymeric material as infill in (artificial) turf fields, the polymeric material is an ethylene or propylene based plastomer, such as an ethylene/butylene or ethylene/octene plastomer, a styrene-based thermoplastic elastomer or a thermoplastic vulcanizate on the basis of polypropylene and an EAM/EADM rubber.

Increasing demand for high quality playing surfaces and intense competition for field accessibility has given rise to a new generation of synthetic turf systems that replicate the look and feel of lush, natural grass. While the first artificial turf systems used in the 1960's and 1970's were hard, significant advancements have been made during the past few decades. By the 1990's, the first synthetic turf systems with sand and rubber infill were introduced, which dramatically improved player performance and safety. Today's synthetic turf, used by many NFL franchises, as well as member associations and teams of the Union of European Football Associations (UEFA), Federation Internationale de Football Association (FIFA), the International Rugby Board and other international sports federations, combines the playing characteristics, look and feel of natural turf, with the advantages of increased frequency of usage, extra revenue generation, safety, longer playing sessions, fewer cancelled games, and lowest cost per playing day.

Rubber infill helps to support grass fibres, adds ballast and an extra layer of fall protection for the players. Infill is required for support the grass fibres and add dimensional stability. Top-dressing or ballast is a standard requirement to add weight. If infill is required, it means the grass itself may not be able to withstand typical daily traffic and activity without the added support.

Silica sand or acrylic coated sand are one of the most commonly used products to add ballast to artificial grass. Other products are for example crumb rubber which is derived from scrap car and truck tires that are ground up and recycled. Two types of crumb rubber infill exist: ambient and cryogenic. Together these make up the most widely used infill in the synthetic sports field and landscape market. Crumb rubber infill is substantially metal free, and, according to the STC Guidelines for Crumb Rubber Infill, should not contain liberated fibre. Another type of infill is coated rubber infill: both ambient and cryogenic rubber can be coated with colorants, sealers, or anti-microbial substances if desired. Coated rubber provides additional aesthetic appeal, reduction of dust by products during the manufacturing process and complete encapsulation of the rubber particle. Another type of infill is EPDM (Ethylene Propylene Diene Monomer), i.e. a polymer elastomer with high resistance to abrasion and wear and will not change its solid form under high temperatures. Typical EPDM colours are green and tan. EPDM has proven its durability as an infill product in all types of climates. Its excellent elasticity properties and resistance to atmospheric and chemical agents provide a stable, high performance infill product. There are also organic infill materials, such as natural cork and/or ground fibres from the outside shell of the coconut. These products can be utilized in professional sports applications as well as for landscaping. At the end of its life cycle it can be recycled directly into the environment.

As mentioned before, sand (silica) infill is one of the original infilling materials utilized in synthetic turf. This product is a natural infill that is non-toxic, chemically stable and fracture resistant. Silica sand infills are typically tan, off-tan or white in color and - depending upon plant location - may be round or sub-round in particle shape. As a natural product there is no possibility of heavy metals, and the dust/turbidity rating is less than 100. It can be used in conjunction with many other infills on the market to provide a safe and more realistic playing surface. The round shape plays an integral part in the synthetic turf system. It is important that silica sand have a high purity (greater than 90%) to resist crushing and absorption of bacteria and other field contaminants. Silica sand can either be coated with different materials as a standalone product or can be used to firm up in combination with traditional crumb rubber infill systems. The class of coated silica sand infill consists of coated, high-purity silica sand with either a soft or rigid coating specifically engineered for synthetic turf. These coatings are either elastomeric or acrylic in nature (non-toxic) and form a bond with the sand grain sealing it from bacteria to provide superior performance and durability over the life of a field. Coated sand is available in various sizes to meet the application's needs. Another type of infill is thermoplastic elastomer (TPE) infill. TPE infill is non-toxic, heavy metal free, available in a variety of colours that resist fading, very long lasting, and 100% recyclable and reusable as infill when the field is replaced. A new class of infill materials is the group of zeolites, i.e. naturally occurring minerals found in specific types of sedimentary rocks. The use of zeolites was of particular interest to the synthetic grass industry since it is certified organic and therefore poses no safety concerns.

Infill materials for artificial grass are known from EP 2 206 833, EP 0 377 925, US-A-5 976 645, US-A-5 958 527, US-A-4 337 283, US-A-3 731 923, JP-A-10037122, EP-A-1 158 099, KR 2014/0088378, KR 101363360, US 2014/0322459, US 2003/0161996, WO-A-2006/109110 and WO-2007/010234.

The use of an infill in artificial grass sports fields has a number of drawbacks. For example, an artificial grass sports field provided with an infill requires intensive maintenance. The initially uniform distribution of the granular infill can be disturbed by intensive usage. As a result, areas containing hardly any infill may form in particular in places where the field is played on very intensively, for example in the goal area, which has an adverse effect on the quality of play, but which above all leads to an increased risk of injury. The distribution and the amount of the granular material of an artificial grass sports field provided with an infill must be verified at regular intervals and repairs must be carried out, if necessary. Furthermore it has become apparent that the weather influences affect the properties of the infill with the passage of time, which has a negative effect on the quality of the infill and thus on the playing characteristics of the artificial grass sports field. A negative factor, for example, is the strong compaction of the infill, as a result of which the artificial grass sports field will feel increasingly hard during play, with an increased risk of injury. Furthermore, the synthetic infill may change (harden or become brittle) under the influence of the weather conditions (sunlight, for example).

An object of the present invention is to provide an infill in artificial grass sports fields that will overcome or minimize one or more of the afore mentioned drawbacks.

An object of the present invention is to provide an infill in artificial grass sports fields that fulfils the requirements of the international sports federations, such as FIFA and UEFA, and has its origin in biobased materials.

The present invention relates thus to an artificial turf suitable for sports fields consisting at least of a substrate to which first artificial grass fibres are attached and of a granular infill, which is provided between said first artificial grass fibres, wherein said granular infill is made of a foam material comprising polylactic acid, wherein the shape of said granular infill is coffee bean.

By using a granular infill made on basis of this group of components one or more of the aforementioned objects are achieved. Methods for manufacturing products from polylactic acid (PLA) are disclosed in WO 2014/158014, EP-A- 2 334 719 and EP-A- 2 137 250, all in the name of the present applicant. Expandable polylactic acid resin particles have been disclosed in EP-A-1 683 828. An example of a method for producing a starting material from which a foamed moulded product can be formed, which starting material is based on particulate expandable polystyrene (EPS) has been disclosed in EP-A- 1 930 365. The contents of these documents are considered to be included here.

In a preferred embodiment the granular infill further comprises one or more bio-based polymers chosen from the group of polybutylene succinate (PBS), polycaprolactone (PCL), poly(3-hydroxybutyrate-co-3-hydroxyvalerate) (PHBV), polyhydroxyalkanoate (PHA) and polyhydroxybutyrate (PHB). Bio-based granular infill according to the present invention is preferably based on polylactic acid and/or combinations with polybutylene succinate (PBS), polycaprolactone (PCL), Poly(3-hydroxybutyrate-co-3-hydroxyvalerate) (PHBV), polyhydroxyalkanoate (PHA) and polyhydroxybutyrate (PHB) and the thus composed granular infill will also be biodegradable.

In another preferred embodiment the granular infill further comprises one or more fossil-based polymers chosen from the group of copolyester of butandiol, adipic acid and terephtalic acid (PBAT), poly(methyl methacrylate), polystyrene and polyolefins. The thus composed granular infill will be qualified as partly bio based granules. The present inventors found that the use of PBAT provides partially bio-based granules that are still biodegradable.

The granular infill may further comprise one or more materials chosen from the group of starch, natural fillers, such as cork, coconut, hemp, grass, cellulose, reed, hay, straw and cardboard. Fillers are added to amend the hydrophilic and/or hydrophobic character of the granules. Bio-based granules based on polylactic acid with natural fillers like cork, coconut, hemp, grass, cellulose, reed, hay, straw and cardboard are identified as biodegradable.

The granular infill may further comprise one or more mineral fillers chosen from the group of zeolites, calcium carbonate, silicon dioxide, aluminium oxide, magnesium oxide, chalk, kaolin and talc. These fillers may be added to increase the density of the granular infill. In addition, bio-based granules, e.g. the present granular infill based on polylactic acid with mineral fillers like zeolites, calcium carbonate, silicon dioxide, aluminium oxide, magnesium oxide, chalk, kaolin and talc can be identified as a biodegradable granular infill.

In a preferred embodiment of the present invention the infill comprises one or more additives chosen from the group of antistatic additives, hydrophilic additive, algaecide and pigments. These additives are necessary for increasing the performance of the infill. Examples of an antistatic additive are polyamide, polyether block amide, polyester block copolymer, a glycerol ester, a synthetic amine or an alkyl sulphonate. An example of a hydrophilic additive is ethylene vinyl alcohol copolymer and polyhydroxyethyl methacrylate. An algaecide is especially used for killing and preventing the growth of algae.

In a preferred embodiment of the present invention the granular infill is provided in a density of 60-300 kg/m³, preferably 80-150 kg/m³, more preferably 120-140 kg/m³. If the density is below the lower value, the infill will be blown away from the sports field under windy conditions. A density higher than the upper value will result in too dense particles, the dense particles will negatively influence the resilience properties of the artificial turf.

In another embodiment the granular infill has a diameter in a range of 0,5 - 5 mm, preferably in a range of 2-3 mm. A suitable diameter is about 1,5 mm. Such a diameter is preferred since the artificial turf blades are positioned in the backing in a specific spacing. A diameter higher than 5 mm will have the effect that the infill cannot be placed between the artificial turf blades.

According to the present invention, the shape of said granular infill is coffee bean. The present inventors found that the value for the RW (Rotational friction) is surprisingly high, i.e. at least 30, when the shape of the granular infill is coffee bean. The shape of "coffee bean" is to be understood as elliptical with a notch over the longitudinal axis. The shape of "coffee bean" is thus different from the cylindrical shape since the cylindrical shape lacks the characteristic notch of the coffee bean. Other parameters that are important for qualifying an infill as a suitable infill are: VBR (Vertical ball rebound), BR (Bal roll), SA(Shock absorption) and DF (deformation). Official test methods have been published and apply here. The test methods applied in this application can be found in FIFA Quality Programme - 3 - Handbook of Test Methods for Football Turf, October 2015 V2.5 (26.06.17).

In an embodiment the present granular infill has an aspect ratio of length/diameter of at least 1,5, preferably at least 2. The specific aspect ratio has a positive influence on the parameters mentioned above, especially the RW (Rotational friction).

The present inventors found that the RW (Rotational friction) can be further improved when the outer surface of said granular infill has undergone a roughened treatment. The outer surface of said granular infill thus obtained can be identified as an orange skin or orange peel.

In another embodiment the outer surface of said granular infill is provided with a coating, such as antistatic silicone or a polyurethane (manufactured by Stahl).

It has been found that spherical beads show the lowest friction and irregular shaped beads like sticks ,tablets, cashew nuts, beads with dimples and the shape of coffee beans show higher friction values. Coffee beans yield the best results. The friction values can be further improved by adding fillers in the polymer or by surface coatings.

According to the present description the shape of spherical is defined as when the smallest (d) vs the largest diameter or length (D: Diameter or L; Length) defined as D/d or L/d has a value of less than 1,10. For example polymerised EPS beads have a dimension of D/d of less than 1,02 and are thus an example of perfectly spherical beads.

According to the present description an irregular shape is defined as not spherical and an irregular shape has thus a dimension D/d > 1,10. When there are lengths of sticks with values up to 8 x times the diameter or where one dimension is a height, sizes with D/d > 2 are even more effective. So a shape of a round tablet with a cylindrical shape is also irregular.

The present invention furthermore relates to the use of the present granular infill in artificial turf suitable for sports fields. Examples of such sports fields are soccer, rugby and field hockey. The present infill can be used in artificial grass for landscape applications as well.

### Standard: Handbook of test methods Edition 2015

Method: An artificial turf system is tested in lab on sport functional characteristics:
- vertical ball rebound : EN 12235*
- reduced ball roll: Handbook of test methods
- angle ball rebound: Handbook of test methods*
- shock absorption: Handbook of test methods*
- vertical deformation: Handbook of test methods*
- rotational resistance: EN 15301-1*
- skin /surface friction: Handbook of test methods
- skin abrasion: Handbook of test methods
- wearing test with lisport XL: Handbook of test methods
- water permeability: EN 12616
- UV ageing: EN 14836

In the present application the following five parameters (test method) were reviewed:
RW = Rotational resistance (according to EN15301-1)
VBR = Vertical ball rebound (2015 handbook)
BR = Ball roll (2015 handbook)
SA = Shock absorption (2015 handbook)
DF = vertical deformation (2015 handbook)
The term "2015 handbook" refers to FIFA Quality Programme - 3 - Handbook of Test Methods for Football Turf, October 2015 V2.5 (26.06.17).

The present invention will now be described by way of non-limiting examples. The present invention will be illustrated by way of photographs 1-16 of the foam obtained.

### Example 1 (not according to the invention)

Polylactic (PLA) microbeads have been prepared on a Berstorff ZE75A_UTX x 36D twin-screw extruder equipped with a Gala underwater granulator (A6). The PLA used was Synterra BF1505 prepared by Synbra Technology. The PLA microbeads have been impregnated in a pressure vessel at 13 bar CO₂ for 18 hours to absorb blowing agent. Pre-foaming of the impregnated microbeads has been done on a commercial EPS prefoamer using a mixture of steam and air to obtain an average pre-foaming temperature of 95°C. The pre-foaming time was 40 sec, which was sufficient to obtain a density of 60 g/L and the right surface modification. After pre-foaming the foamed beads have been coated with 0.5% of a 35% solids content active food grade silicone emulsion (marketed by Van Meeuwen as Food care (trademark) Antiblock).

### Example 2 (not according to the invention)

PLA microbeads have been prepared on a Berstorff ZE75A_UTX x 36D twin-screw extruder equipped with a Gala underwater granulator (A6). The PLA used was Synterra BF1505 prepared by Synbra Technology. The PLA microbeads have been impregnated in a pressure vessel at 10 bar CO₂ for 18 hours to absorb blowing agent. Pre-foaming of the impregnated microbeads has been done on a commercial EPS prefoamer using a mixture of steam and air to obtain an average pre-foaming temperature of 95°C. The pre-foaming time was 40 sec, which was sufficient to obtain a density of 140 g/L and the right surface modification. After pre-foaming the foamed beads have been coated with 0.5% of 35% solids content active food grade silicone emulsion (marketed by Van Meeuwen as Foodcare (trademark) Antiblock).

### Example (not according to the invention)

A commercial available artificial turf was provided with the foam material as manufactured according to Example 1 and 2.

The granular infill manufactured according to Example 1 and Example 2 is provided between the synthetic fibers of the artificial turf. The artificial turf as used in the Example includes a pile fabric having a backing and pile elements extending upwardly from the backing, and an infill layer filled on the backing such that the pile elements are at least partially embedded in the infill layer composed of the foam material as manufactured according to Example 1 and 2.

The artificial turf having the foam material as manufactured according to Example 1 and 2 as infill has acceptable elasticity, hardness, and sliding resistance, so that it is possible to prevent the players from being injured and improve playability.

Additional experiments were carried out according to the manufacturing method described in Example 1. Only Examples 13 and 14 are according to the present invention.

Table 1 discloses in column 1 the experimental number, in column 2 the PLA type and recipe, in column 3 the additives, in column 4 the amount of carbon black Polyone, in column 5 the amount of XX, in column 6 the amount of carbon black Sukano, in column 7 the extruder speed, in column 8 the shape, in column 9 the size, and in column 9 the ratio L/D. Table 1 also discloses the presence of a coating, i.e. type and amount, and the presence of a surface treatment (SM). The last seven columns of Table 1 disclose the test results, i.e. density, RW (Rotational resistance), VBR (Vertical ball rebound), BR (Bal roll), SA(Shock absorption) and DF (deformation) and remarks.

The value for RW should be at least 30, and Table 1 clearly teaches that such a value is obtained for several types of granular infill.

Table 2 discloses experimental results for different types of granular infill, such as polypropylene (PP), recycled polyethylene terephthalate (rPET), polyethylene (PE), polystyrene (PS) and polylactic acid (PLA). From the results shown in Table 2 it is clear that granular infill made of polylactic acid (PLA) shows an acceptable value for RW (Rotational resistance), whereas other types of granular infill do not provide acceptable results, i.e. values for RW lower than 30.

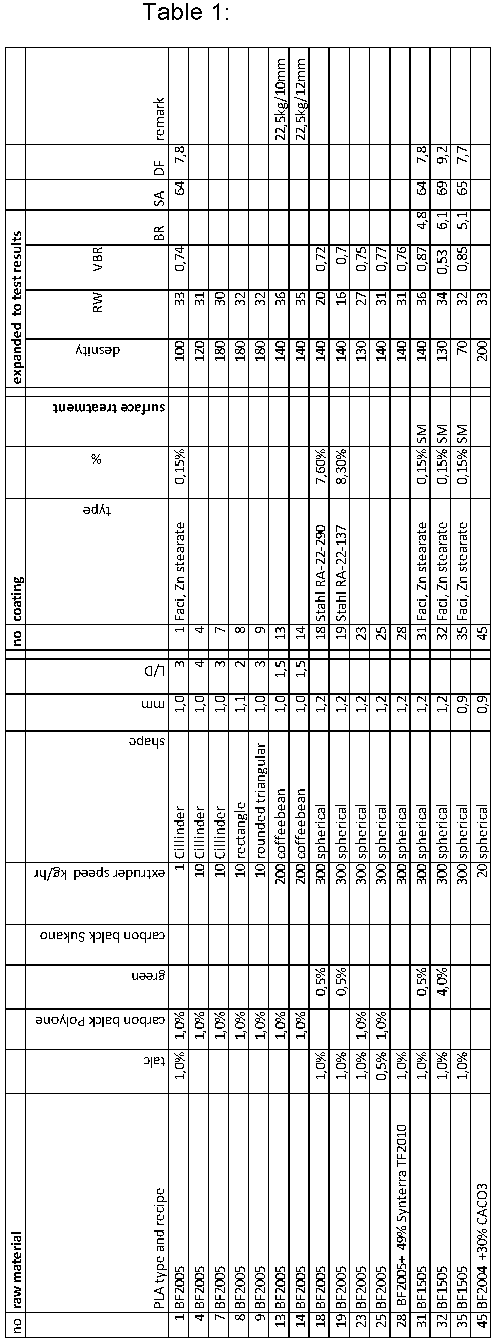

In table 1 the following terms have been used:
SM = surface modified with coarse cells on the outside, to increase friction PolyOne (FDM 85911 BK B101 MB) carbon black
Sukano® PLA as S546 antistaticum
Sukano® PLA cc S514 carbon black
Sukano PLA cc D6719 brown masterbatch
Synterra BF2004, 2005, 1505 and TF2010 are regular grades sold by Synbra Technology
Faci Zn stearate
RW = Rotational resistance
VBR = Vertical ball rebound
BR = Ball roll
SA = Shock absorption
DF = deformation

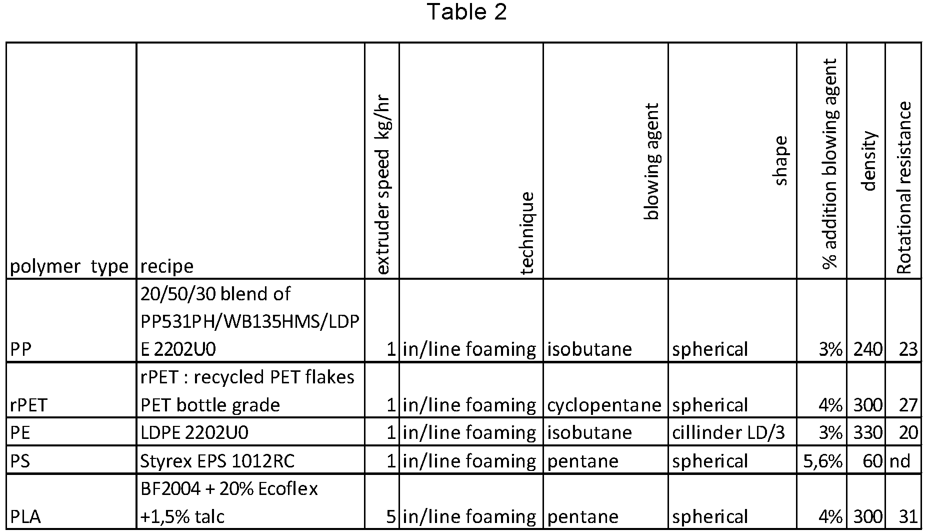

In table 2 the following terms have been used in a small Berstoff twin screw lab extruder with a capacity of max 10 kg/hr while adding a targeted % of blowing agent in the liquid polymer melt during the last stage of the extrusion, such that the foam is made in situ, when entering out of the orifice:
Sabic® PP 531Ph (homopolymer, 3 g/10min @ 230°C, 2.16 kg);
Borealis PP WB135HMS (homopolymer, 2.4 g/10min);
Sabic® LDPE 2202U0 (high melt strength)
Styrex EPS 1012RC Synbra Technology
Synterra BF2004 Synbra Technology
nd= not determined
The different types of shapes of the granular infill will now be discussed.

Photographs 1 and 2 show a round shape. Photographs 3 and 4 show a cashew nut shape. Photographs 5-13 show a stick shape. Photographs 14 and 15 show an oblong shape. Photograph 16 shows a coffee bean shape, according to the present invention, and photographs of surface modified granular infill have been shown in photographs 1, 3, 5 , 7, 8, 9 ,10 and 13.

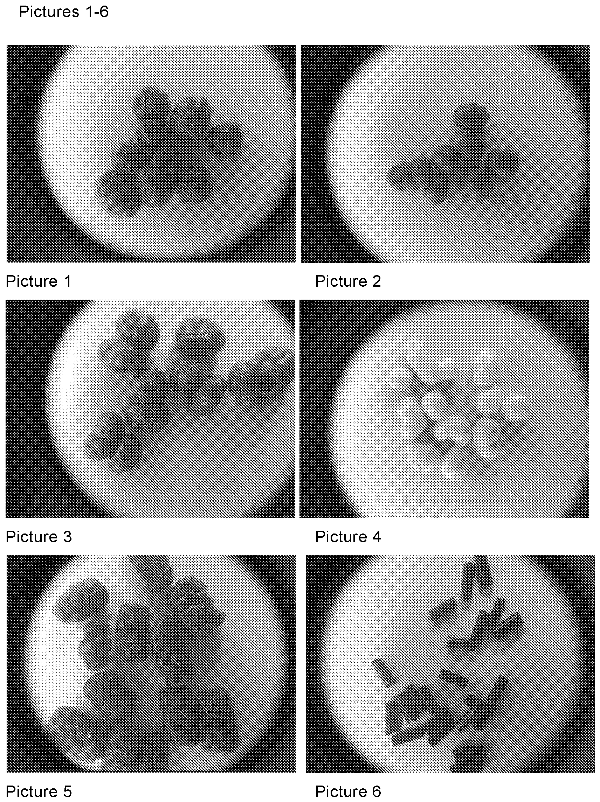

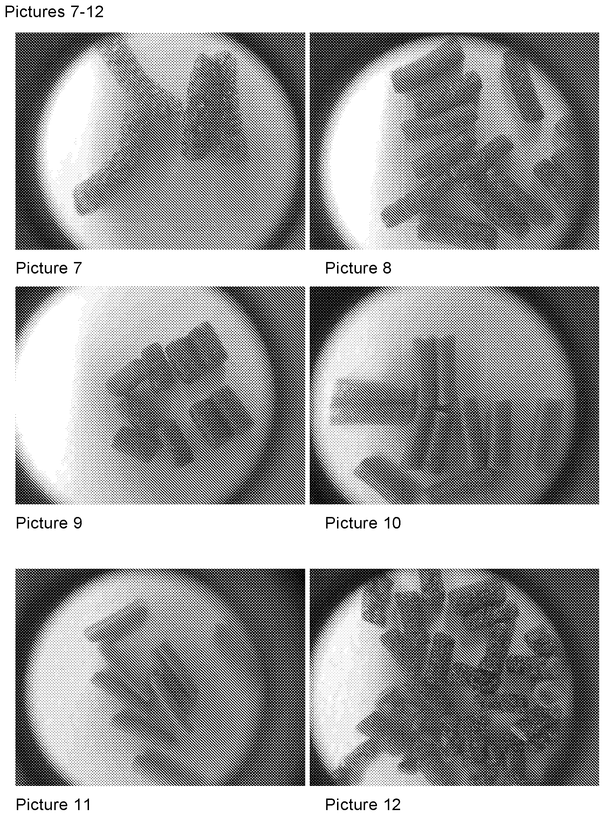

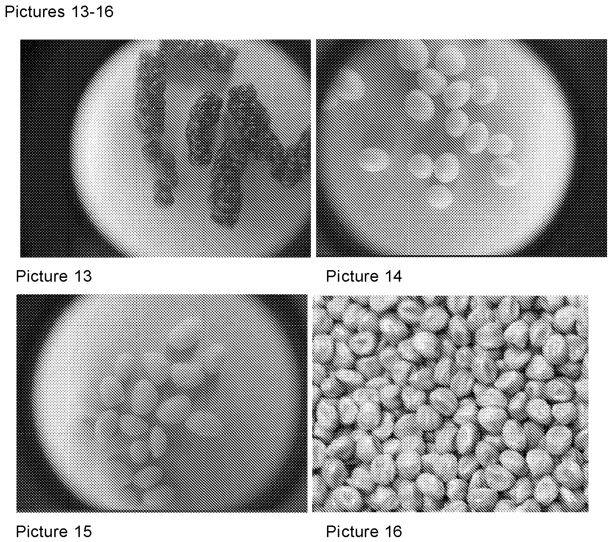

## Claims

1. An artificial turf suitable for sports fields consisting at least of a substrate to which first artificial grass fibers are attached and of a granular infill, which is provided between said first artificial grass fibers, **characterized in that** said granular infill is made of a foam material comprising polylactic acid, wherein the shape of said granular infill is coffee bean.

2. An artificial turf according to claim 1, **characterized in that** said granular infill further comprises one or more bio-based polymers chosen from the group of polybutylene succinate (PBS), polycaprolactone (PCL), poly(3-hydroxybutyrate-co-3-hydroxyvalerate) (PHBV), polyhydroxyalkanoate (PHA) and polyhydroxybutyrate (PHB).

3. An artificial turf according to any one or more of claims 1-2, **characterized in that** said granular infill further comprises one or more fossil-based polymers chosen from the group of copolyester of butandiol, adipic acid and terephtalic acid (PBAT), poly(methyl methacrylate), polystyrene and polyolefines.

4. An artificial turf according to any one or more of claims 1-3, **characterized in that** said granular infill further comprises one or more materials chosen from the group of starch, natural fillers, such as cork, coconut, hemp, grass, cellulose, reed, hay, straw and cardboard.

5. An artificial turf according to any one or more of claims 1-4, **characterized in that** said granular infill further comprises one or more mineral fillers chosen from the group of zeolites, calciumcarbonate, silicondioxide, alumiumoxide, magnesium oxide, chalk, kaolin and talc.

6. An artificial turf according to any one or more of claims 1-5, **characterized in that** said granular infill further comprises one or more additives chosen from the group of antistatic additives, hydrophilic additive, algaecide and pigments.

7. An artificial turf according to any one or more of the preceding claims, **characterized in that** the granular infill is provided in a density of 60-300 kg/m³, preferably 80-150 kg/m³, more preferably 120-140 kg/m³.

8. An artificial turf according to any one or more of the preceding claims, **characterized in that** the outer surface of said granular infill has undergone a roughened treatment.

9. An artificial turf according to any one or more of the preceding claims, **characterized in that** the outer surface of said granular infill is provided with a coating.

10. The use of a granular infill made of a foam material comprising polylactic acid, wherein the shape of said granular infill is coffee bean, in artificial turf suitable for sports fields.

## Patentansprüche

1. Kunstrasen, der für Sportplätze geeignet ist, bestehend wenigstens aus einem Substrat, an dem erste künstliche Glasfasern befestigt sind, und einem granulatförmigen Füllmaterial, das zwischen den ersten künstlichen Glasfasern angeordnet ist, **dadurch gekennzeichnet, dass** das granulatförmige Füllmaterial aus einem Schaumstoffmaterial besteht, das Polymilchsäure umfasst, wobei die Form des granulatförmigen Füllmaterials kaffeebohnenförmig ist.

2. Kunstrasen gemäß Anspruch 1, **dadurch gekennzeichnet, dass** das granulatförmige Füllmaterial ferner ein oder mehrere Polymere auf Biobasis ausgewählt aus der Gruppe von Polybutylensuccinat (PBS), Polycaprolacton (PCL), Poly(3-hydroxybutyrat-co-3-hydroxyvalerat) (PHBV), Polyhydroxyalkanoat (PHA) und Polyhydroxybutyrat (PHB) umfasst.

3. Kunstrasen gemäß einem oder mehreren der Ansprüche 1-2, **dadurch gekennzeichnet, dass** das granulatförmige Füllmaterial ferner ein oder mehrere Polymere auf fossiler Basis ausgewählt aus der Gruppe von Copolyester von Butandiol, Adipinsäure und Terephthalsäure (PBAT), Poly(methylmethacrylat), Polystyrol und Polyolefinen umfasst.

4. Kunstrasen gemäß einem oder mehreren der Ansprüche 1-3, **dadurch gekennzeichnet, dass** das granulatförmige Füllmaterial ferner ein oder mehrere Materialien ausgewählt aus der Gruppe von Stärke, natürlichen Füllstoffen, wie z. B. Kork, Kokosnuss, Hanf, Gras, Cellulose, Schilf, Heu, Stroh und Pappe umfasst.

5. Kunstrasen gemäß einem oder mehreren der Ansprüche 1-4, **dadurch gekennzeichnet, dass** das granulatförmige Füllmaterial ferner einen oder mehrere mineralische Füllstoffe ausgewählt aus der Gruppe von Zeolithen, Calciumcarbonat, Siliciumdioxid, Aluminiumoxid, Magnesiumoxid, Kalk, Kaolin und Talkum umfasst.

6. Kunstrasen gemäß einem oder mehreren der Ansprüche 1-5, **dadurch gekennzeichnet, dass** das granulatförmige Füllmaterial ferner einen oder mehrere Zusatzstoffe ausgewählt aus der Gruppe von antistatischen Zusatzstoffen, hydrophilem Zusatzstoff, Algizid und Pigmenten umfasst.

7. Kunstrasen gemäß einem oder mehreren der vorstehenden Ansprüche, **dadurch gekennzeichnet, dass** das granulatförmige Füllmaterial in einer Dichte von 60-300 kg/m³, vorzugsweise 80-150 kg/m³, bevorzugter 120-140 kg/m³, bereitgestellt ist.

8. Kunstrasen gemäß einem oder mehreren der vorstehenden Ansprüche, **dadurch gekennzeichnet, dass** die äußere Oberfläche des granulatförmigen Füllmaterials eine aufrauende Behandlung durchlaufen hat.

9. Kunstrasen gemäß einem oder mehreren der vorstehenden Ansprüche, **dadurch gekennzeichnet, dass** die äußere Oberfläche des granulatförmigen Füllmaterials mit einer Beschichtung versehen ist.

10. Verwendung eines granulatförmigen Füllmaterials, das aus einem Schaumstoffmaterial besteht, das Polymilchsäure umfasst, wobei die Form des granulatförmigen Füllmaterials kaffeebohnenförmig ist, in einem Kunstrasen, der für Sportplätze geeignet ist.

## Revendications

1. Gazon artificiel adapté aux terrains de sport constitué au moins d'un substrat auquel sont fixées des premières fibres d'herbe artificielle et d'un remplissage granulaire, qui est prévu entre lesdites premières fibres d'herbe artificielle, **caractérisé en ce que** ledit remplissage granulaire est réalisé en un matériau en mousse comprenant de l'acide polylactique, dans lequel la forme dudit remplissage granulaire est en grain de café.

2. Gazon artificiel selon la revendication 1, **caractérisé en ce que** ledit remplissage granulaire comprend en outre un ou plusieurs polymère(s) d'origine biologique choisi(s) dans le groupe constitué par le succinate de polybutylène (PBS), le polycaprolactone (PCL), le poly(3-hydroxybutyrate-co-3)-hydroxyvalérate) (PHBV), le polyhydroxyalcanoate (PHA) et le polyhydroxybutyrate (PHB).

3. Gazon artificiel selon l'une quelconque des revendications 1 et 2 ou les deux, **caractérisé en ce que** ledit remplissage granulaire comprend en outre un ou plusieurs polymère(s) d'origine fossile choisi(s) dans le groupe constitué par un copolyester de butandiol, l'acide adipique et l'acide téréphtalique (PBAT), le poly (méthacrylate de méthyle), le polystyrène et des polyoléfines.

4. Gazon artificiel selon l'une quelconque ou plusieurs des revendications 1 à 3, **caractérisé en ce que** ledit remplissage granulaire comprend en outre un ou plusieurs matériau(x) choisi(s) dans le groupe constitué par l'amidon, des charges naturelles, telles que le liège, la noix de coco, le chanvre, l'herbe, la cellulose, le roseau, le foin, la paille et le carton.

5. Gazon artificiel selon l'une quelconque ou plusieurs des revendications 1 à 4, **caractérisé en ce que** ledit remplissage granulaire comprend en outre une ou plusieurs charge(s) minérale(s) choisie(s) dans le groupe constitué par des zéolithes, le carbonate de calcium, le dioxyde de silicium, l'oxyde d'aluminium, l'oxyde de magnésium, la craie, le kaolin et le talc.

6. Gazon artificiel selon l'une quelconque ou plusieurs des revendications 1 à 5, **caractérisé en ce que** ledit remplissage granulaire comprend en outre un ou plusieurs additif(s) choisi(s) dans le groupe constitué par des additifs antistatiques, un additif hydrophile, un algicide et des pigments.

7. Gazon artificiel selon l'une quelconque ou plusieurs des revendications précédentes, **caractérisé en ce que** le remplissage granulaire est prévu en une densité de 60 à 300 kg/m³, de préférence de 80 à 150 kg/m³, plus préférablement de 120 à 140 kg/m³.

8. Gazon artificiel selon l'une quelconque ou plusieurs des revendications précédentes, **caractérisé en ce que** la surface extérieure dudit remplissage granulaire a subi un traitement de rugosification.

9. Gazon artificiel selon l'une quelconque ou plusieurs des revendications précédentes, **caractérisé en ce que** la surface extérieure dudit remplissage granulaire est pourvue d'un revêtement.

10. Utilisation d'un remplissage granulaire réalisé en un matériau en mousse comprenant de l'acide polylactique, dans laquelle la forme dudit remplissage granulaire est en grain de café, dans un gazon artificiel adapté aux terrains de sport.
